# EUROPEAN PATENT APPLICATION

(11) **EP 4 156 012 A1**
(43) Date of publication of application: **29.03.2023**
(21) Application number: 21199558.4
(22) Date of filing: 28.09.2021
(51) Int. Cl.: G06F 30/00, G06F 113/24

(54) **IMPROVED COMPUTER-AIDED DESIGN OF A SHEET METAL PART**

(71) Applicant: Bricsys NV, 9050 Gent (Ledeberg) (BE)
(72) Inventor: Ermolin, Egor, 630090 Novosibirsk (RU); Geniyatov, Ivan, 630090 Novosibirsk (RU); Perminov, Sergey, 630090 Novosibirsk (RU)
(74) Representative: IP HILLS NV

(57) **Abstract**

Computer-implemented design of a sheet metal part is disclosed. A digital representation of a sheet metal shell comprising flanges and edges is obtained. A digital representation of a sheet metal part is automatically generated for the sheet metal shell via computation of a spanning tree for a face adjacency graph. The face adjacency graph comprises graph vertices corresponding to flanges and graph edges corresponding to shared edges of the shell. The generated sheet metal part is displayed in a graphical user interface for user editing and/or user acceptance.

## Description

### FIELD OF THE INVENTION

The present computer-implemented invention concerns designing a (digital representation of a) sheet metal part in a graphical user interface (GUI).

### BACKGROUND

A sheet metal part is described by design features. Features designate regions of the part with manufacturing significance in the context of machining. A sheet metal part comprises multiple connected flat metal slabs, called flange features or flanges. A flange is delimited by edges, which can be shared with other features or be free edges. A flange edge can be shared with a bend feature, a junction feature, or a miter feature. A three-dimensional sheet metal part can be manufactured from a flat metal sheet. The flat metal sheet can be cut to create a preform. The preform can be bent along certain lines to create a three-dimensional structure. These lines correspond to bend features. Edges of the preform can become proximate due to bending, either in a miter feature if the corresponding flanges are coplanar, or a junction feature otherwise, i.e. if the corresponding flanges have a relative angle. Flanges can be attached in the junction or miter feature, e.g. via welding.

The design of a sheet metal part usually deals with the inverse operation. For a sheet metal shell a corresponding sheet metal part should be found. The shell has several connected flanges with shared edges. The design of the part involves partitioning the shared edges into bend, junction and miter features. It may also be necessary to introduce one or more additional miter features in a flange. It may even be necessary to create the part from two or more (a priori detached) preforms.

Welding requires time and energy, which increases the manufacturing cost. Moreover, flange connections are stronger at bend features than at junction and miter features. It is therefore desirable to minimize the seam length. The seam length is the total length of junction and miter features.

https://www.youtube.com/watch?v=2aYE4F6dlQw, "How to Convert 3D part into sheet metal in Solidworks", by CAD CAM TUTORIAL (17 January 2018), illustrates Convert to Sheet Metal in Solidworks. Convert to Sheet Metal enables a user to design a sheet metal part from a sheet metal shell. All bend features are manually selected. Miter features need to be manually introduced.

The present invention aims to reduce the required user input, and hence to improve user ergonomics.

Vorkov, "Generating flat patterns for folded structures: Search space reduction", Packaging Technology and Science 31(2), pages 97-110 (2018), doi: 10.1002/pts.2356, discloses mapping of a shell to a face adjacency graph (FAG). The FAG comprises a graph vertex for each flange of the shell, and a graph edge in between two graph vertices if the corresponding flanges of the shell share an edge. Via generation of spanning trees from the FAG, candidate preforms can be found for the shell. In Vorkov, a graph edge has a weight equal to the corresponding shared edge length. Vorkov discloses a minimal spanning tree. Vorkov discloses usage in design software or a CAD module. Vorkov mentions user constraints, but remains silent on their specification. Vorkov discloses generating a constant number of solutions. Vorkov discloses that splitting a shell, corresponding to generating multiple non-connected trees from the FAG, is often the only possibility to manufacture a corresponding sheet metal part. Vorkov remains silent on automated introduction of miter features. Vorkov is not concerned with improving user ergonomics.

The present invention aims to resolve at least some of the problems and disadvantages mentioned above.

### SUMMARY OF THE INVENTION

In a first aspect, the present invention provides a computer-implemented method (CIM) for designing a sheet metal part, according to claim 1.

In a second aspect, the present invention provides a computer system for designing a sheet metal part. The computer system is configured for performing the CIM according to the first aspect of the present invention.

In a third aspect, the present invention provides a computer program product (CPP) for designing a sheet metal part. The CPP comprises instructions which, when the CPP is executed by a computer, cause the computer to carry out the CIM according to the first aspect of the present invention.

By automatically suggesting a sheet metal part for a sheet metal shell, which can then be edited in a GUI, the amount of user input is reduced, which improves user ergonomics. Further advantages are disclosed in the detailed description.

### DESCRIPTION OF FIGURES

**Figures 1, 2 and 3** show resp. a perspective view of an exemplary sheet metal shell (100) comprising candidate miters (161, 162), a perspective view of an exemplary sheet metal part (200), and a top view of an exemplary sheet metal preform (300).
**Figures 4 and 5** show an exemplary face adjacency graph (400) and corresponding spanning tree (500), respectively.
**Figure 6** shows a perspective view of an exemplary sheet metal shell (600).
**Figure 7** shows a flow chart of an embodiment according to the present invention.
**Figures 8a to 8h****,** **figures 9a to 9g****,** and **figures 10a to 10e** illustrate several steps to compare a manual workflow for sheet metal design according to a prior art method with an embodiment of the present invention.
**Figures 11a to 11c** and **figures 12a to 12c** illustrate automatic candidate miter creation according to the present invention.

### DETAILED DESCRIPTION OF THE INVENTION

In a first aspect, the present invention provides a CIM for designing a sheet metal part. In a second aspect, the present invention provides a computer system for designing a sheet metal part. In a third aspect, the present invention provides a CPP for designing a sheet metal part. The computer system according to the second aspect of the present invention is configured for performing the CIM according to the first aspect of the present invention. The computer system comprises one or more tangible processors. Automatic execution of a step of the CIM means execution by one or more tangible processors of a computer system. The CPP comprises computer-processable instructions which, when the CPP is executed by a computer, such as a computer system according to the second aspect, cause the computer to carry out the CIM according to the first aspect of the present invention. The present invention may provide for a tangible non-transient computer-readable storage medium comprising the CPP according to the third aspect of the present invention. The three aspects of the present invention are hence interrelated. Therefore, all features disclosed in this document, above or below, may relate to each of these aspects, even if they have been disclosed in conjunction with a particular aspect.

An entity (such as a sheet metal shell or a sheet metal part), as used in the present computer-implemented invention, is a digital representation of the entity. The digital representation comprises, or allows to derive, one or more properties of the entity, such as geometric properties, material properties and/or semantic properties. More particularly, the digital representation defines the entity in terms of low-level features, such as, for example, vertices, edges, and faces. The digital representation may be viewable and editable via a corresponding CPP, such as computer-aided design (CAD) software. CAD software provides a GUI for viewing and editing one or more (digital representations of) entities. A digital representation of an entity is hence a computer-processable three-dimensional image in vector format, defined in terms of low-level features. An exemplary file format for storing a digital representation of one or more entities is DWG. A non-limiting list of examples of CAD software comprises AutoCAD, BricsCAD, and SolidWorks.

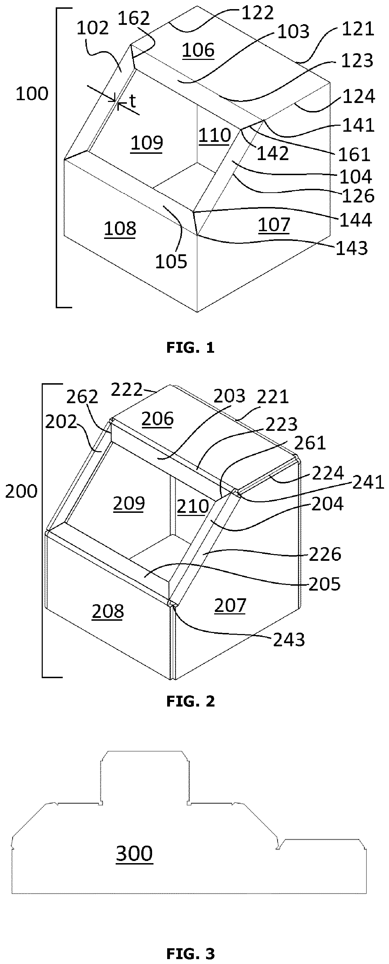

Reference is made to exemplary Figures 1, 2 and 3. A sheet metal shell (100) is an object with internal volume bounded by faces. The sheet metal shell has a shell thickness (t), corresponding to the thickness of a thin metal sheet. Some of the faces of the shell can be partitioned in pairs of parallel faces with a distance equal to the shell thickness (t). A pair corresponds to a flange (102, 103, 104, 105, 106, 107, 108, 109, 110) of the shell. The parallel faces of a pair have planar dimensions substantially larger than the shell thickness (t). A flange is hence also called a 'face', even though it has a thickness. A flange is said to be bounded by 'edges' (121, 122, 123, 124, 126, 161, 162), even though a flange has a thickness. 'Edges' of a flange can intersect in corners, also called 'vertices' (141, 142, 143, 144). An edge of a flange can belong to that flange only, and is then called a 'free edge'. In this case, a face of the sheet metal shell can be connected to both faces of the pair corresponding to the flange and have one planar dimension equal to the shell thickness. This face forms the 'free edge' of the flange. Alternatively, an edge of a flange can be shared with another flange. A shared edge is either a candidate miter (161, 162) if the corresponding flanges are coplanar or a candidate bend (121, 122, 123, 124, 126) otherwise. In the sheet metal part (200), a candidate bend (121, 122, 123, 124, 126) of the shell corresponds to a bend feature (221, 223, 226) or a junction feature (122, 124). In the sheet metal part (200), a candidate miter (161, 162) of the shell (100) either corresponds to a miter feature (261, 262) or a connected feature (removed candidate miter). In case of a connected feature, there is an uninterrupted flange in the sheet metal part at the position which corresponds to the candidate miter. The position of a connected feature may or may not be indicated in the corresponding sheet metal part, to indicate the removed candidate miter. When a candidate miter is removed, or when a miter feature is converted to a connected feature, the corresponding adjacent coplanar flanges are merged along the candidate miter, or along the miter feature, as the case may be. A bend feature (221, 223, 226) may correspond to two cylindrical surfaces with a distance equal to the shell thickness (t), i.e. the two cylindrical surfaces have a difference in radius equal to the shell thickness (t). A bend feature (221, 223, 226) corresponds to a fold line of a flat sheet metal preform (300). A junction feature (222, 224) and a miter feature (261, 262) correspond to preform edges which become adjacent due to the folding, and may be attached, e.g. via welding. For a miter feature (261, 262), the corresponding flanges (203 and 204 for 261, and 202 and 203 for 262) are 'coplanar', i.e. the faces of the pairs corresponding to the flanges are pairwise coplanar. In case the corresponding flanges (206 and 207, for example) have a non-zero relative angle and the shared edge (224) is not a bend feature, the shared edge is called a junction feature. In the sheet metal part (200), vertices (141, 143) of the shell can be provided with relief features (241, 243) to avoid material conflicts during folding of the corresponding preform (300).

The CIM comprises several steps. A digital representation of a sheet metal shell is obtained. The sheet metal shell comprises flanges, edges and vertices. Each edge of the shell bounds one or more flanges of the shell. Each vertex of the shell lies on two or more edges of the shell. A shared edge of the shell, i.e. an edge shared by multiple flanges of the shell, is a candidate bend or a candidate miter. A digital representation of a sheet metal part is automatically generated based on the sheet metal shell. The sheet metal part comprises flanges. A candidate bend of the shell corresponds to a bend feature or a junction feature in the part. A candidate miter of the shell corresponds to a miter feature or a connected feature in the part. The generated part is automatically displayed in a GUI. Zero, one, two or more feature changes of the part are received via the GUI and the displayed part is updated correspondingly. Hereby, a feature change is a change of a bend feature to a junction feature, a junction feature to a bend feature, a miter feature to a connected feature, or a connected feature to a miter feature. User acceptance of the displayed part is received.

By automatically suggesting a sheet metal part for a sheet metal shell, which can then be edited in a GUI, the amount of user input is reduced, which improves user ergonomics. Instead of having to manually designate all bend features as such, a user now only has to adapt wrongly designated features.

Preferably, receiving a feature change of the part in the GUI is performed via cursor selection at or near the displayed feature of the part, such as cursor selection of the displayed feature or cursor selection of a callout or widget associated with the displayed feature. This is advantageous as a feature change can be inputted in the GUI at the user's current visual focus.

In a preferred embodiment, the sheet metal part is generated by automatically generating a face adjacency graph (FAG) comprising graph vertices and graph edges. A graph vertex corresponds to a flange of the shell. A graph edge of the FAG connects two graph vertices if the corresponding flanges of the shell share an edge. A shared edge is either a candidate miter if the corresponding flanges are coplanar or a candidate bend otherwise. A spanning tree (ST) is computed for the FAG. The sheet metal part comprises:
- flanges,
- bend features corresponding to graph edges of the ST which represent candidate bends,
- junction features corresponding to graph edges of the FAG which represent candidate bends and which are absent in the ST,
- miter features corresponding to graph edges of the FAG which represent candidate miters and which are absent in the ST.

For candidate miters corresponding to graph edges of the ST, the sheet metal part comprises a connected feature, i.e. an uninterrupted flange at the position which corresponds to the candidate miter. In the sheet metal part displayed in the GUI, the position of a connected feature may or may not be indicated.

One of ordinary skill in the art will appreciate that a FAG and an ST, as used herein, are a digital representation of a FAG and a digital representation of an ST, respectively. An exemplary computer implementation of graph representations and algorithms can be found in the Boost Graph Library, in boost version 1.77.0.

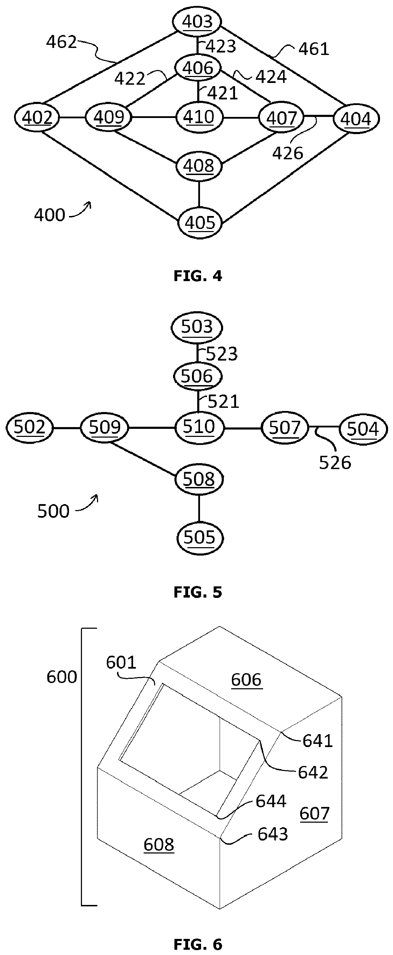

Figures 4 and 5 show a FAG (400) and an ST (500), respectively, for the sheet metal shell (100). Flanges (102 to 110) of the shell correspond to graph vertices (402 to 410) of the FAG (400) and graph vertices (502 to 510) of the ST (500). Herein, the last two digits of corresponding flanges and graph vertices are equal. Shared edges (121, 122, 123, 124, 161, 162) of flanges of the shell (100) correspond with graph edges (421, 422, 423, 424, 461, 462) of the FAG (400). The ST (500) comprises graph edges (521, 523) corresponding to a subset of the graph edges of the FAG (400). Herein, the last two digits of corresponding shared edges of the shell (100) and graph edges of the FAG (400) and ST (500) are equal. The sheet metal part (200) comprises:
- bend features (221, 223, 226) corresponding to graph edges (521, 523, 526) of the ST (500) which represent candidate bends;
- junction features (222, 224) corresponding to graph edges (422, 424) of the FAG (400) which represent candidate bends and which are absent in the ST (500);
- miter features (261, 262) corresponding to graph edges of the FAG (400) which represent candidate miters and which are absent in the ST (500).

Alternatively, the sheet metal part may be generated based on a first and a second FAG. Based on the first FAG, a candidate miter can be marked as a connected feature. The unmarked candidate miters are not considered in the second FAG, i.e. they cannot become an edge of the second ST, and therefore correspond to miter features in the sheet metal part.

In a preferred embodiment, a first ST for a first FAG is automatically computed. The first FAG comprises graph vertices and graph edges. A graph vertex of the first FAG corresponds to a flange of the shell. A graph edge of the first FAG connects two graph vertices if the corresponding flanges of the shell share an edge. A candidate miter is marked as a connected feature if the candidate miter is represented in the first ST or bounds only one flange. A candidate miter bounding only one flange may, for example, arise from removal of other candidate miters pertaining to coplanar flanges. Such a candidate miter corresponds to an unnecessary cut in the sheet metal preform, and can be removed. A second ST for a second FAG is automatically computed. The second FAG comprises graph vertices and graph edges. A graph vertex of the second FAG corresponds to a group of flanges linked via shared edges which are marked as connected features. A graph edge of the second FAG connects two graph vertices in case corresponding flanges of the shell share a candidate bend. By excluding unmarked candidate miters from the second FAG, the second ST will not make use of the unmarked candidate miters, and these will become miter features in the sheet metal part. The sheet metal part comprises flanges, bend features corresponding to the graph edges of the second ST, junction features corresponding to the graph edges of the second FAG absent in the second ST, and miter features corresponding to unmarked candidate miters. The bend features hence correspond to candidate bends represented in the second ST. The junction features hence correspond to candidate bends which do not correspond to bend features. The miter features hence correspond to candidate miters which do not correspond to connected features. The position of a connected feature may or may not be indicated in the displayed sheet metal part in the GUI.

A candidate miter may be generated automatically for the sheet metal shell. Additionally or alternatively, a user may draw in the GUI a line for a candidate miter on or for the sheet metal shell.

In a preferred embodiment, the method comprises the step of finding for a vertex of the shell, over the flanges comprising the vertex, another pairing vertex with minimal distance to the vertex. Preferably, the method comprises the step of finding for each vertex of the shell, over the flanges comprising the vertex, another pairing vertex with minimal distance to the vertex. For each vertex and its corresponding pairing vertex, in case no edge of the shell comprises both vertices, an edge is inserted in the shell in between the vertices and the flange comprising both vertices is split along the edge. Hereby, additional candidate miters are generated automatically. This procedure favors short candidate miters, and balances feasibility of generating a sheet metal part which is unfoldable with seam length minimization, i.e. minimization of the sum of the lengths of miter and junction features in the part. Additionally, a user may draw in the GUI a line for a candidate miter on or for the sheet metal shell. This user drawing may be performed before and/or after the automated generation of candidate miters.

Reference is made to the exemplary shell (600) of Figure 6. For vertex 641, another pairing vertex (642) with minimal distance to the vertex (641) is sought over the flanges (601, 606, 607) comprising the vertex (641). For vertex 642, another pairing vertex (641) with minimal distance to the vertex (642) is sought over the flanges (601) comprising the vertex (642). For vertex 643, another pairing vertex (644) with minimal distance to the vertex (643) is sought over the flanges (601, 607, 608) comprising the vertex (643). For vertex 641 and the corresponding pairing vertex (642), no edge of the shell comprises both vertices, and therefore an edge is inserted in between the vertices (641, 642) and the flange (601) comprising both vertices (641, 642) is split along the edge. This shared edge is a candidate miter. For vertex 642 and the corresponding pairing vertex (641), there is now already an edge comprising both vertices, so no edge is introduced. With the above disclosed preferred embodiment, the shell (600) of Figure 6 is converted to the shell (100) of Figure 1. Four candidate miters (161, 162) have been automatically generated.

Preferably, each time a feature change is received via the GUI, the feature change is treated as a user constraint, and a new spanning tree, or new first and second spanning trees, as the case may be, are generated subject to the user constraints, and the displayed part is updated correspondingly. Since an ST with N graph vertices contains N-1 graph edges, which correspond to bend features and/or connected features, the user will have to designate N-1 shell edges as such in the theoretical worst case scenario with this preferred embodiment. However, for substantially all shells corresponding to manufacturable sheet metal parts, there will be at least one bend feature and/or connected feature correctly designated. In fact, as the inventors of the present invention have found, typically many features are correctly designated. This arises in part due to the statistical probability for having no features, or only a small amount of features, correctly designated becoming vanishingly small with increasing number of flanges. Therefore, compared to the prior art, significantly less feature designations are required with the present method. This significantly improves user ergonomics compared to the prior art.

Preferably, the position of a connected feature is indicated in the displayed part. Preferably, the step of receiving of zero, one, two or more feature changes of the part via the GUI and updating of the displayed part is zero, one, two or more iterations of:
- receiving via the GUI a change of a junction feature to a bend feature, a bend feature to a junction feature, a miter feature to a connected feature, or a connected feature to a miter feature, wherein the change defines a new user constraint;
- automatically generating a new sheet metal part subject to the new user constraint and user constraints of previous iterations; and
- automatically updating in the GUI the displayed part to the new part.

Herein, the user constraint corresponds to the result of the feature change, i.e. a change of a junction feature to a bend feature, for example, corresponds to constraining the shared edge to be a bend feature. Preferably, the automatic generation of a new sheet metal part is based on computing a new spanning tree, or new first and second spanning trees, as the case may be, subject to the new user constraint and user constraints of previous iterations. Preferably, the new spanning trees subject to the user constraints are based on new face adjacency graphs. Preferably, flanges which share an edge which is constrained to be a bend feature, constrained to be a connected feature, or marked as a connected feature correspond to a common graph vertex of the new face adjacency graph. Preferably, a new face adjacency graph does not comprise a graph edge for a shared edge constrained to be a junction feature or a miter feature. Alternative realizations via new face adjacency graphs based on graph edge weights are disclosed further below. Preferably, in case two or more constrained features of the part are incompatible, the features are indicated automatically in the GUI. This may involve displaying a warning icon over or near each corresponding feature. In a preferred embodiment, an automatic verification whether the part is unfoldable is performed. An example of incompatible user constraints are three mutually perpendicular flanges having a shared vertex, for which the three shared edges are constrained to be a bend feature. Such a part is not unfoldable, i.e. it cannot be created from a flat preform. Another example of incompatible user constraints are bend feature constraints such that the unfolded part would have overlapping flanges.

In a preferred embodiment, in the GUI, both the (folded) part corresponding to the shell and a corresponding preform are displayed. Herein, the preform is the unfolded part. Preferably, a change of a bend feature to a junction feature or a change of a connected feature to a miter feature can also be received via cursor selection at or near a corresponding displayed feature on the displayed preform.

In a preferred embodiment, a FAG is a weighted FAG. Each graph edge of the weighted FAG comprises a weight. Preferably, the weights of the weighted FAG, or first and second weighted FAG, as the case may be, are defined by a strictly monotone function of the corresponding shared edge length. Preferably, the computation of the STs targets extremal (minimal or maximal) edge weight sum.

In a most preferred embodiment, the weight of an edge is defined by a strictly decreasing linear function of the shared edge length. Preferably, minimal edge weight sum is targeted. This is advantageous, as the ST with minimal edge weight sum corresponds to minimizing the seam length for the sheet metal part. A minimal seam length provides, as disclosed above, the structurally most stable form, and a minimal amount time and resources for flange attachment, via e.g. welding. Most preferably, the weight of an edge is defined by a strictly decreasing non-negative linear function of the shared edge length. The inventors have found that the following exemplary edge weight function w(e) provides good results: w(e) = 3 ^{∗} L - λ(e), wherein e denotes an edge, λ(e) the length of edge e, and L the maximum of the lengths of the edges, L = maxₑ λ(e).

Alternatively, a user selection of an edge weight function from a list of multiple edge weight functions is received, wherein the weight of each edge is defined by the selected edge weight function, and wherein computation of the STs targets minimal edge weight sum. An edge weight function may pertain to one or more geometric properties of the shared edge and/or to one or more geometric properties of the corresponding flanges associated with the shared edge. Exemplary geometric properties include length, area, inclination w.r.t. the vertical axis, etc. The list of multiple edge weight functions may be implicit. A displayed list in the GUI may be a list of keywords/phrases, wherein the user selects a keyword/phrase, wherein each keyword/phrase is associated with an edge weight function, and wherein the selected edge weight function is the edge weight function associated with the selected keyword/phrase. As an example, a phrase can be "minimal seam length", which is associated with a strictly decreasing non-negative linear function of the shared edge length, such as w(e) disclosed above. This is advantageous, as the proposed part in the GUI will have a higher degree of correspondence with the part the user wants to design from the sheet metal shell, and therefore even less user adjustment of the proposed sheet metal part is needed.

Preferably, an ST for a FAG is computed via Kruskal's minimum ST algorithm or Prim's minimum ST algorithm. The above disclosed Boost Graph Library contains an exemplary implementation of these algorithms.

An alternative embodiment for the new FAG, or new first and second FAG, as the case may be, as disclosed above, wherein common graph vertices have been proposed for groups of flanges linked via constrained bend features, constrained connected features and/or marked connected features, is the correspondence of each flange with a different graph vertex in the new FAG, or new first and second FAG, as the case may be, in conjunction with the overwriting of an edge weight for a constrained bend feature, constrained connected feature and/or marked connected feature. For example, when targeting minimal seam length and the edge weight function is a strictly decreasing function of the shared edge length, the weight for a constrained bend feature, constrained connected feature and/or marked connected feature can be overwritten with an edge weight smaller than the weights of all unconstrained and unmarked edges, such as weight 0 in case the edge weight function is the above-disclosed function w(e). In case the edge weight function is a strictly increasing function of the shared edge length, the weight for a constrained bend feature and/or constrained connected feature and/or marked connected feature can be overwritten with an edge weight larger than the weights of all unconstrained and unmarked shared edges.

An alternative embodiment for the new FAG, or new first and second FAG, as the case may be, as disclosed above, wherein absence of a graph edge for a constrained junction feature and/or a constrained miter feature has been proposed, is the correspondence of each shared edge with a separate graph edge in the new FAG, or new first and second FAG, as the case may be, in conjunction with the overwriting of an edge weight for a constrained junction feature and/or a constrained miter feature. For example, when targeting minimal seam length and the edge weight function is a strictly decreasing function of the shared edge length, the weight for a constrained junction feature and/or a constrained miter feature can be overwritten with an edge weight larger than the weights of all unconstrained edges, such as weight 5 ^{∗} L in case the edge weight function is the above-disclosed function w(e). In case the edge weight function is a strictly increasing function of the shared edge length, the weight for a constrained junction feature and/or constrained miter feature can be overwritten with an edge weight smaller than the weights of all unconstrained edges.

In a preferred embodiment, a shell is automatically obtained from a solid. A solid is obtained, for example by user drawing in the GUI, or loading of a file comprising the solid. The solid comprises faces. Each face comprises zero, one or more contours. Each face comprises zero, one or more lines with endpoints on edges of the face. A user may indicate one or more faces of the solid to remove for the sheet metal shell. The sheet metal shell is automatically generated from the solid. A face of the solid is automatically converted to a flange. A hole is automatically extruded in a flange for each corresponding contour, at the corresponding position, and according to the contour. A candidate miter is automatically introduced in a flange for each corresponding line, at the corresponding position, and according to the line. The candidate miter may or may not be constrained to be a miter feature. One or more relief features may be introduced to avoid material conflicts during folding of the preform.

The invention is further described by the following non-limiting examples which further illustrate the invention, and are not intended to, nor should they be interpreted to, limit the scope of the invention.

### EXAMPLES

### Example 1: Embodiment according to the present invention

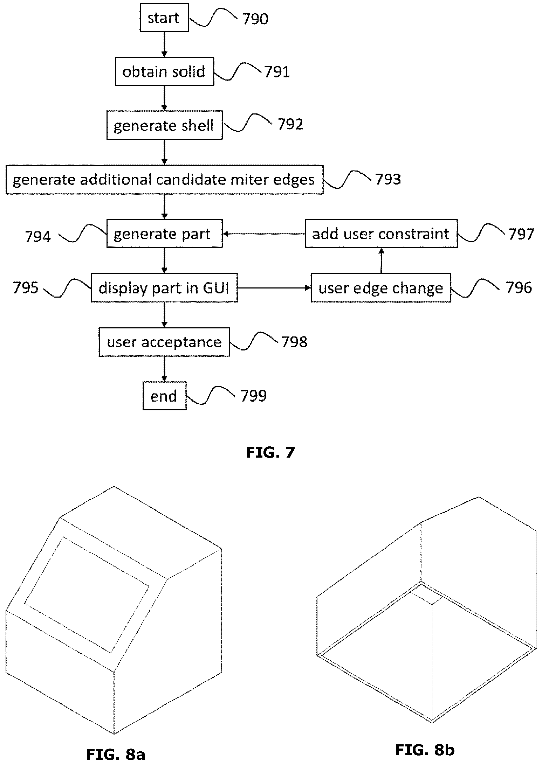

**Figure 7** shows a flow chart of an embodiment of the present invention from start (790) to end (799).

A solid is obtained (791). The solid may be user drawn or loaded from a file. The solid comprises faces. A face of the solid may comprise one or more contours. A face of the solid may comprise one or more lines with endpoints on edges of the face. A user may launch a dedicated command to convert the solid into a sheet metal part.

A user may select a face of the solid which should not be converted to a flange. Other faces of the solid are converted into flanges. The solid is automatically converted into an initial sheet metal shell (792). A contour on a face of the solid may hereby be extruded in the corresponding flange at the corresponding location, thereby creating a hole in the flange. A line on a face of the solid with endpoints on edges of the face may hereby be converted into a candidate miter at the corresponding location, thereby splitting the flange accordingly. Such a candidate miter may correspond to a user drawn line on a face of the solid. Such a candidate miter may or may not be constrained to be a miter feature.

Additional candidate miters may be generated automatically (793). This may be performed by searching for each vertex, over the flanges comprising the vertex, for another pairing vertex with minimal distance to the vertex. In case the shell does not comprise an edge comprising the vertex and its pairing vertex, a candidate miter is introduced in the corresponding flange comprising both vertices. The flange is split along the introduced edge. A corresponding example has been given in Figures 6 and 1, and the corresponding description above. This step (793) may hence result in an updated sheet metal shell. It may however be, that in following the steps described above, no additional edges are introduced, in particular in case the shell already contains for each vertex and its pairing vertex an edge comprising both vertices.

A sheet metal part is generated for the sheet metal shell (794).

This may be performed by constructing a first weighted FAG for the shell. The first weighted FAG comprises graph vertices and graph edges. Each graph vertex of the first weighted FAG corresponds to one or more flanges of the shell. Initially, when arriving at step 794 from step 793, a graph vertex corresponds to a flange of the shell. However, as user constraints are added (797), flanges which are constrained to be interconnected (flanges linked via shared edges which are constrained to be a bend feature or a connected feature) can correspond to a common vertex in the first weighted FAG. Herein, earlier markings of a candidate miter as a connected feature may be ignored and/or removed. A graph edge of the first weighted FAG may correspond to an unconstrained shared edge of the shell. The graph edge interconnects graph vertices corresponding to flanges which share the unconstrained shared edge. Initially, when arriving at step 794 from step 793, each shared edge is unconstrained, and therefore represented by a graph edge. However, as user constraints are added (797), a shared edge which is constrained to be a miter feature or a junction feature, is not represented by a graph edge. Moreover, a shared edge constrained to be a bend feature or a connected feature is also not represented by a graph edge, as flanges linked via such a shared edge correspond to a common graph vertex of the first weighted FAG. The weights of the graph edges can be defined by the function w(e) disclosed in the description above. Via Kruskal's or Prim's minimum ST algorithm, a first ST can be retrieved for the first weighted FAG.

A candidate miter may be marked as a connected feature if the candidate miter is represented in the first ST or bounds only one flange.

A second weighted FAG for the shell is constructed. The second weighted FAG comprises graph vertices and graph edges. Each graph vertex of the second weighted FAG corresponds to one or more flanges of the shell. Initially, when arriving at step 794 from step 793, a graph vertex corresponds to a group of flanges linked via shared edges which are marked as connected features. One of ordinary skill in the art will appreciate that when no shared edges are marked as connected features, each flange of the shell corresponds to a separate graph vertex of the second weighted FAG. However, as user constraints are added (797), flanges which are constrained or marked to be interconnected (flanges linked via shared edges which are constrained to be a bend feature, constrained to be a connected feature, or marked to be a connected feature) can correspond to a common vertex in the second weighted FAG. A graph edge of the second weighted FAG may correspond to an unconstrained candidate bend of the shell. The graph edge interconnects graph vertices corresponding to flanges which share the unconstrained candidate bend. Initially, when arriving at step 794 from step 793, each candidate bend is represented by a graph edge. However, as user constraints are added (797), a candidate bend which is constrained to be a junction feature, is not represented by a graph edge. The weights of the graph edges can be defined by the function w(e) disclosed in the description above. Via Kruskal's or Prim's minimum ST algorithm, a second ST can be retrieved for the second weighted FAG.

The generated sheet metal part comprises flanges, bend features corresponding to graph edges of the second ST, and junction features corresponding to candidate bends which do not correspond to bend features. The generated sheet metal part may also comprise connected features; and miter features corresponding to candidate miters which do not correspond to connected features. It may however be the case that the updated sheet metal shell does not comprise candidate miters. The skilled person will appreciate that in this case, the sheet metal part also does not comprise connected or miter features.

The generated sheet metal part is displayed in a GUI (795). The skilled person appreciates that this may involve the generation of a two-dimensional pixelated rendering based on a view frustum of the three-dimensional sheet metal part. The user may alter the view of the part. This may involve zooming, rotation of the part and/or changing of the view frustum. The displayed part comprises displayed features. Herein, bend features, junction features, miter features, and connected features comprise a distinct graphical representation. The user may accept the displayed part (798), whereupon the part may become available in a model space and/or the part may be stored on a tangible non-transient computer-readable storage medium. Then the method ends (799). Alternatively, the user may select via a cursor displayed in the GUI a displayed feature, or a widget or callout associated with a displayed feature. This results in a feature change triggered by the user (796). Hereby, a bend feature may be changed to a junction feature, a junction feature may be changed to a bend feature, a miter feature may be changed to a connected feature, or a connected feature may be changed to a miter feature. The result of the feature change defines a user constraint (797). For example, when changing a connected feature to a miter feature, the corresponding shared edge is constrained to be a miter feature. A new sheet metal part is then generated, subject to the user constraints, as disclosed above.

If during the above steps, the sheet metal part is not unfoldable, i.e. the sheet metal part cannot be folded from a flat preform, or the unfolded part has overlapping flanges, a different solution, i.e. a different sheet metal part may automatically be generated. In this case, the different sheet metal part is displayed in the GUI. It may arise, that no solution can be computed under certain user constraints. If during the above steps, incompatible user constraints are defined, this may be indicated in the GUI at or near the corresponding features. If during the above steps, the sheet metal part becomes not unfoldable due to the user constraints, this may be indicated in the GUI. If during the above steps, the unfolded part corresponding to the sheet metal part has overlapping flanges due to the user constraints, this may be indicated in the GUI.

### Example 2: Comparison prior art and present invention

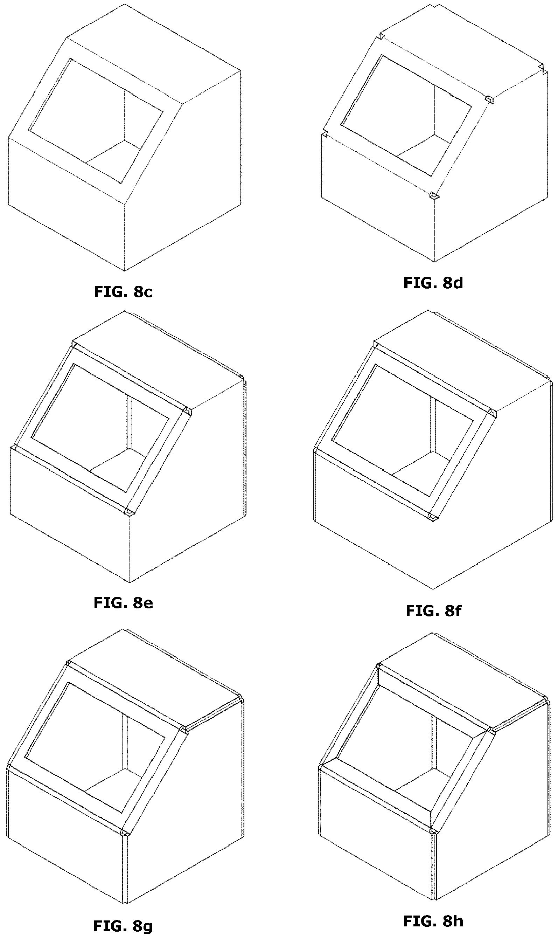

**Figures 8a to 8h** illustrate several steps to compare a manual workflow for sheet metal design according to a prior art method with an embodiment of the present invention. **Figure 8a** shows an initial solid with a user-drawn contour on a face of the solid. **Figure 8h** shows a sheet metal part based on the solid. The corresponding preform (300) is shown in **Figure 3****.**

With the present invention, the user needs to create the solid in **Figure 8a****,** start a corresponding CAD command, select the solid, indicate the faces to be removed, and the result in **Figure 8h** is automatically obtained with the method disclosed above, which the user can accept.

With a prior art method, the user needs to create the solid in **Figure 8a****,** start a corresponding CAD command to convert the solid to a shell, select the solid, indicate the faces to be removed, which results in the shell according to **Figure 8b****.** Then, the user needs to manually extrude a hole, by starting a corresponding CAD command and selecting the contour, resulting in the shell according to **Figure 8c****.** Then, the user needs to create the relief features, by starting a corresponding CAD command and selecting the shell, resulting in the shell according to **Figure 8d****.** Then the user needs to create bend features, by starting a corresponding CAD command and either selecting pairs of faces of the shell, or directly selecting edges of the shell, for which a corresponding bend feature is introduced. A number of clicks is needed equal to twice the number of desired bend features, or equal to the number of bend features, respectively. In addition, the user needs to move the cursor to the respective locations in the GUI and/or needs to rotate the displayed shell and/or needs to alter the view frustum to be able to select the faces/edges. This results in (intermediate) **Figure 8e** and **Figure 8f****.** Then, the user can convert the remaining edges to junction features by starting a corresponding CAD command, resulting in **Figure 8g****.** Finally, the user needs to introduce four miter features, resulting in the sheet metal part displayed in **Figure 8h****.** Hereby, the user needs to be careful that the sheet metal part can be unfolded without overlapping flanges. In case the user wants to minimize seam length, the user would also need to measure the corresponding edge lengths, and compute various sums of edge lengths for various groups of bend features.

As can be readily observed, the amount of user interaction with the GUI is lower with the present invention as compared to the prior art method.

### Example 3: Comparison prior art and present invention

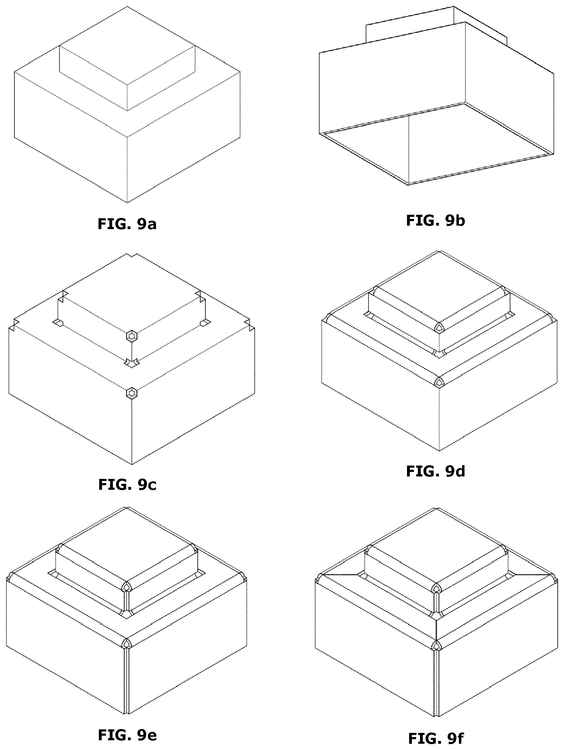

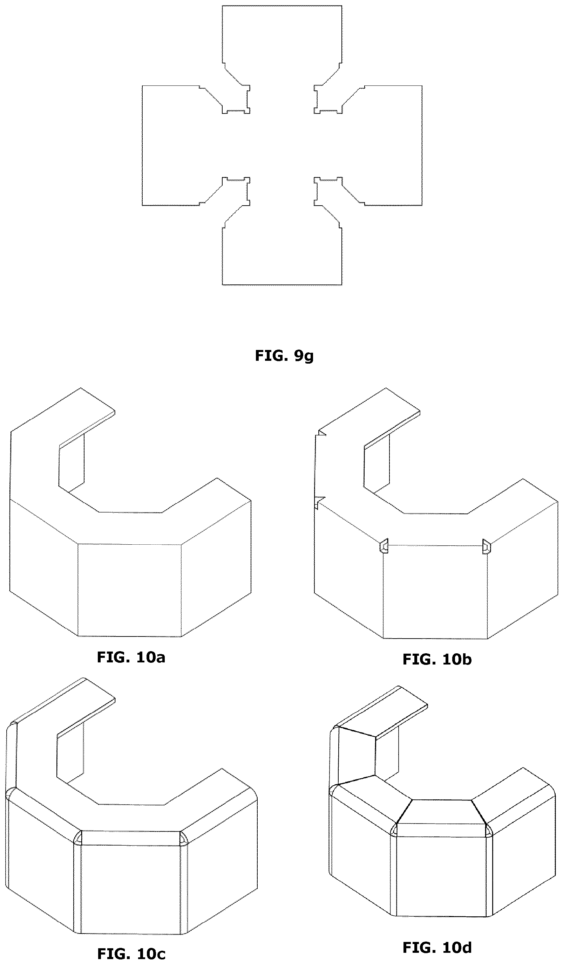

**Figures 9a to 9g** illustrate several steps to compare a manual workflow for sheet metal design according to a prior art method with an embodiment of the present invention. **Figure 9a** shows an initial solid. **Figure 9f** shows a sheet metal part based on the solid. The corresponding preform is shown in **Figure 9g****.**

With the present invention, the user needs to create the solid in **Figure 9a****,** start a corresponding CAD command, select the solid, indicate the faces to be removed, and the result in **Figure 9f** is automatically obtained with the method disclosed above, which the user can accept.

With a prior art method, the user needs to create the solid in **Figure 9a****,** start a corresponding CAD command to convert the solid to a shell, select the solid, indicate the faces to be removed, which results in the shell according to **Figure 9b****.** Then, the user needs to create the relief features, by starting a corresponding CAD command and selecting the shell, resulting in the shell according to **Figure 9c****.** Then the user needs to create bend features, by starting a corresponding CAD command and either selecting pairs of faces of the shell, or selecting edges of the shell, for which a corresponding bend feature is introduced. A number of clicks is needed equal to twice the number of desired bend features, or equal to the number of bend features, respectively. In addition, the user needs to move the cursor to the respective locations in the GUI and/or needs to rotate the displayed shell and/or needs to alter the view frustum to be able to select the faces/edges. This results in **Figure 9d****.** Then, the user can convert the remaining edges to junction features by starting a corresponding CAD command, resulting in **Figure 9e****.** Finally, the user needs to introduce four miter features, resulting in the sheet metal part displayed in **Figure 9f****.** Hereby, the user needs to be careful that the sheet metal part can be unfolded without overlapping flanges. In case the user wants to minimize seam length, the user would also need to measure the corresponding edge lengths, and compute various sums of edge lengths for various groups of bend features.

As can be readily observed, the amount of user interaction with the GUI is lower with the present invention as compared to the prior art method.

### Example 4: Comparison prior art and present invention

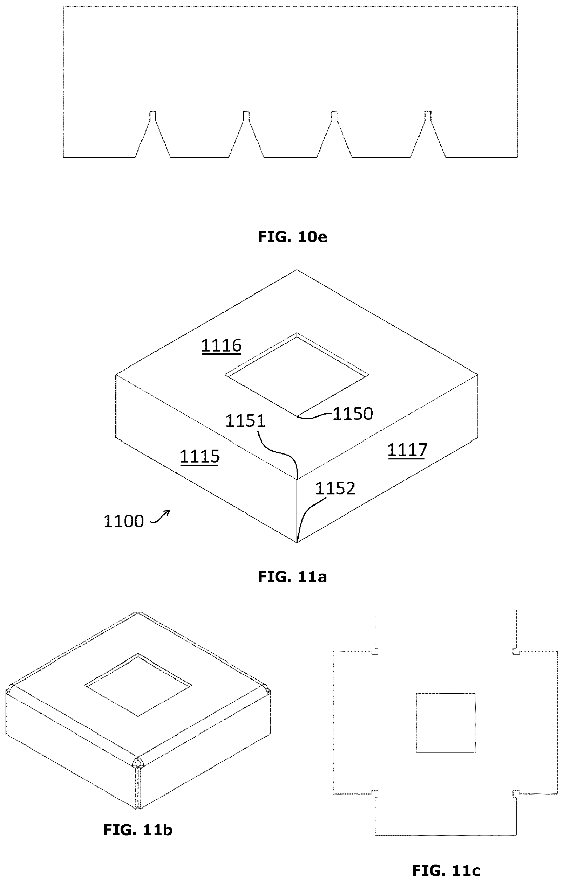

**Figures 10a to 10e** illustrate several steps to compare a manual workflow for sheet metal design according to a prior art method with an embodiment of the present invention. **Figure 10a** shows an initial sheet metal shell. **Figure 10d** shows a sheet metal part based on the shell. The corresponding preform is shown in **Figure 10e****.**

With the present invention, the user needs to create the shell in **Figure 10a****,** start a corresponding CAD command, select the shell, and the result in **Figure 10d** is automatically obtained with the method disclosed above, which the user can accept.

With a prior art method, the user needs to create the shell in **Figure 10a****,** start a CAD command to create relief features, resulting in **Figure 10b****.** Then the user needs to create bend features, by starting a corresponding CAD command and either selecting pairs of faces of the shell, or selecting edges of the shell, for which a corresponding bend feature is introduced. A number of clicks is needed equal to twice the number of desired bend features, or equal to the number of bend features, respectively. In addition, the user needs to move the cursor to the respective locations in the GUI and/or needs to rotate the displayed shell and/or needs to alter the view frustum to be able to select the faces/edges. This results in **Figure 10c****.** Finally, the user needs to introduce four miter features, resulting in the sheet metal part displayed in **Figure 10d****.** Hereby, the user needs to be careful that the sheet metal part can be unfolded without overlapping flanges. In case the user wants to minimize seam length, the user would also need to measure the corresponding edge lengths, and compute various sums of edge lengths for various groups of bend features.

As can be readily observed, the amount of user interaction with the GUI is lower with the present invention as compared to the prior art method.

### Example 5: Automated candidate miter creation

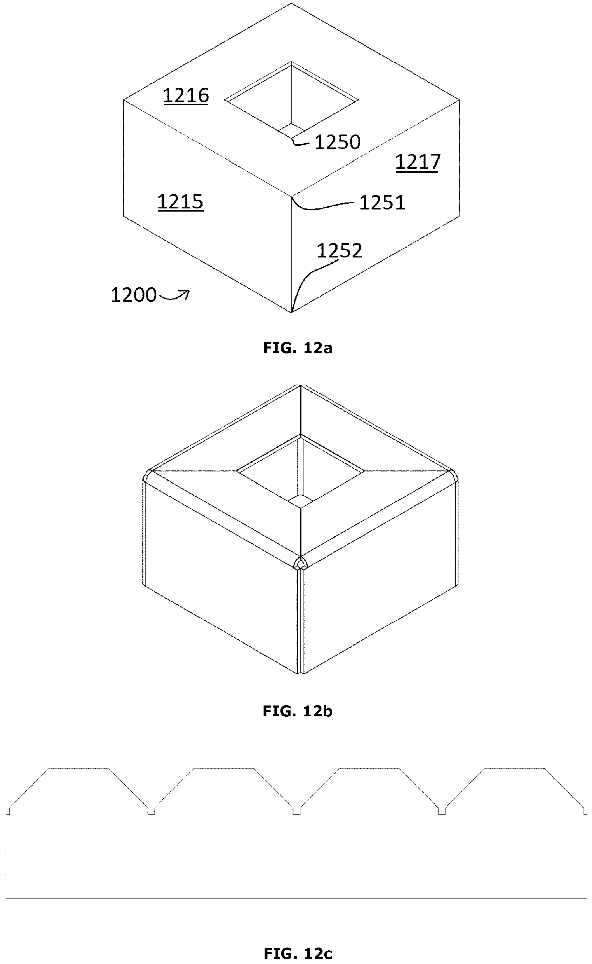

**Figures 11a to 11c** and **figures 12a to 12c** illustrate automatic candidate miter creation according to an embodiment of the present invention.

**Figures 11b** and **11c** show an automatically generated sheet metal part and the corresponding preform, respectively, for the sheet metal shell (1100) of **Figure 11a****.** Flanges 1115, 1116 and 1117 comprise vertex 1151. Of the vertices in these flanges other than vertex 1151, vertex 1152 is most proximate to vertex 1151. Vertex 1152 is hence the pairing vertex for vertex 1151. In particular, vertex 1152 is more proximate to vertex 1151 than vertex 1150. There is no additional candidate miter introduction for the shell (1100), and no flanges are split. The resulting part and preform, shown in **Figures 11b** and **11c**, respectively, have a minimal seam length.

**Figures 12b** and **12c** show an automatically generated sheet metal part and the corresponding preform, respectively, for the sheet metal shell (1200) of **Figure 12a****.** Flanges 1215, 1216 and 1217 comprise vertex 1251. Of the vertices in these flanges other than vertex 1251, vertex 1250 is most proximate to vertex 1251. Vertex 1250 is hence the pairing vertex for vertex 1251. In particular, vertex 1250 is more proximate to vertex 1251 than vertex 1252. A candidate miter is introduced in between vertices 1250 and 1251, and the flange split correspondingly. The resulting part and preform, shown in **Figures 12b** and **12c****,** respectively, have a minimal seam length.

## Claims

1. Computer-implemented method for designing a sheet metal part, comprising the steps of:
- obtaining a digital representation of a sheet metal shell comprising flanges, edges and vertices, wherein each edge bounds one or more flanges, wherein each vertex lies on two or more edges;
- automatically finding for each vertex, over the flanges comprising said vertex, another pairing vertex with minimal distance to said vertex;
- automatically, for each vertex and the corresponding pairing vertex, in case no edge comprises both vertices, inserting an edge in between the vertices and splitting the flange comprising both vertices along the edge;
- automatically generating a digital representation of a sheet metal part by:
• computing a first spanning tree for a first face adjacency graph comprising graph vertices and graph edges, wherein a graph vertex of the first face adjacency graph corresponds to a flange of the shell, wherein a graph edge of the first face adjacency graph connects two graph vertices if the corresponding flanges of the shell share an edge, a shared edge being either a candidate miter if the corresponding flanges are coplanar or a candidate bend otherwise;
• marking a candidate miter as a connected feature if the candidate miter is represented in the first spanning tree or bounds only one flange;
• computing a second spanning tree for a second face adjacency graph comprising graph vertices and graph edges, wherein a graph vertex of the second face adjacency graph corresponds to a group of flanges linked via shared edges marked as connected features, wherein a graph edge of the second face adjacency graph connects two graph vertices if corresponding flanges of the shell share a candidate bend;
wherein the part comprises flanges, bend features corresponding to candidate bends represented in the second spanning tree, junction features corresponding to candidate bends which do not correspond to bend features, connected features, and miter features corresponding to candidate miters which do not correspond to connected features;
- automatically displaying the part in the graphical user interface;
- receiving zero, one, two or more feature changes of the part via the graphical user interface and updating the displayed part correspondingly;
- receiving user acceptance of the displayed part.

2. Computer-implemented method according to preceding claim 1, wherein said step of receiving zero, one, two or more feature changes of the part and updating the displayed part is:
- zero, one, two or more iterations of:
• receiving via the graphical user interface a change of a junction feature to a bend feature, a bend feature to a junction feature, a miter feature to a connected feature, or a connected feature to a miter feature, wherein the change defines a new user constraint;
• automatically generating a new sheet metal part by computing new first and second spanning trees subject to the new user constraint and user constraints of previous iterations;
• automatically updating in the graphical user interface the displayed part to the new part.

3. Computer-implemented method according to preceding claim 2, wherein the new spanning trees subject to the user constraints are based on new face adjacency graphs, wherein a graph vertex corresponds to a group of flanges linked via shared edges which are constrained to be bend features, constrained to be connected features and/or marked as connected features.

4. Computer-implemented method according to any one of preceding claims 2 and 3, wherein the new spanning trees subject to the user constraints are based on new face adjacency graphs, wherein a new face adjacency graph does not comprise a graph edge for a shared edge which is constrained to be a junction feature or constrained to be a miter feature.

5. Computer-implemented method according to any one of the preceding claims, wherein receiving a feature change of the part in the graphical user interface is performed via cursor selection at or near the displayed feature of the part, such as cursor selection of the displayed feature or cursor selection of a callout or widget associated with the displayed feature.

6. Computer-implemented method according to preceding claim 2 and optionally any one of preceding claims 3 to 5, wherein the method comprises the step of automatically indicating in the graphical user interface two or more features of the part subject to incompatible user constraints.

7. Computer-implemented method according to any one of the preceding claims, wherein the method comprises the step of automatically verifying whether the part is unfoldable.

8. Computer-implemented method according to preceding claim 7, wherein in the graphical user interface both the part and a corresponding preform are displayed, wherein the preform is the unfolded part, wherein a change of a bend feature to a junction feature or a change of a connected feature to a miter feature can be indicated at or near a corresponding displayed feature of the preform.

9. Computer-implemented method according to any one of the preceding claims, wherein a face adjacency graph is a weighted face adjacency graph, wherein each graph edge comprises a weight defined by a strictly monotone function of the corresponding shared edge length, wherein the computation of the spanning trees targets minimal or maximal edge weight sum.

10. Computer-implemented method according to preceding claim 9, wherein the weight of an edge is defined by a strictly decreasing linear function of the shared edge length and minimal edge weight sum is targeted.

11. Computer-implemented method according to any one of preceding claims 1 to 8, wherein the method comprises the step of receiving a user selection of an edge weight function from a list of multiple edge weight functions, wherein a face adjacency graph is a weighted face adjacency graph, wherein each graph edge comprises a weight defined by the selected edge weight function, wherein the computation of the spanning trees targets minimal edge weight sum.

12. Computer-implemented method according to any one of preceding claims 9 to 11, wherein a spanning tree for a face adjacency graph is computed via Kruskal's spanning tree algorithm or Prim's spanning tree algorithm.

13. Computer-implemented method according to any one of the preceding claims, wherein the step of obtaining the shell comprises the steps of:
- obtaining a solid comprising faces, wherein a face comprises zero, one or more contours, wherein a face comprises zero, one or more lines with endpoints on edges of the face;
- automatically generating the sheet metal shell from the solid, by converting a face to a flange, extruding a hole in a flange for each contour, and introducing a candidate miter in a flange for each line.

14. Computer system for designing a sheet metal part, wherein the computer system is configured for performing the computer-implemented method according to any one of the preceding claims 1 to 13.

15. Computer program product for designing a sheet metal part, wherein the computer program product comprises computer-processable instructions which, when the computer program product is executed by a computer, cause the computer to carry out the computer-implemented method according to any one of the preceding claims 1 to 13.
